(19) **Europäisches Patentamt**

**European Patent Office**

**Office européen des brevets**

(11) **EP 1 144 955 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(51) Int Cl.[7]: **G01C 25/00**, G01P 21/00, G01P 15/00

(21) Anmeldenummer: **99968310.5**

(22) Anmeldetag: **15.12.1999**

(86) Internationale Anmeldenummer:
**PCT/DE1999/004037**

(87) Internationale Veröffentlichungsnummer:
**WO 2000/037891 (29.06.2000 Gazette 2000/26)**

(54) **VERFAHREN ZUM VERBESSERN DER MESSWERTE EINES INERTIALEN MESSSYSTEMS**

METHOD FOR IMPROVING THE MEASUREMENT VALUES OF AN INERTIAL MEASUREMENT SYSTEM

PROCEDE PERMETTANT D'AMELIORER LES VALEURS DE MESURE D'UN SYSTEME DE MESURE INERTIAL

(84) Benannte Vertragsstaaten:
**DE FR GB SE**

(30) Priorität: **18.12.1998 DE 19858621**

(43) Veröffentlichungstag der Anmeldung:
**17.10.2001 Patentblatt 2001/42**

(73) Patentinhaber: **Autoflug GmbH**
**25462 Rellingen (DE)**

(72) Erfinder:
 • **DRÜCKE, Peter**
  **D-28307 Bremen (DE)**
 • **HINSCH, Thomas**
  **D-28870 Ottersberg (DE)**

(74) Vertreter: **Müller, Karl-Ernst, Dr., Dipl.-Ing. et al**
**Patentanwälte**
**Becker & Müller,**
**Turmstrasse 22**
**40878 Ratingen (DE)**

(56) Entgegenhaltungen:
**DE-C- 19 721 217**

 • **A.LAWRENCE: "Modern Inertial Technology" 1992 , SPRINGER-VERLAG , NEW YORK XP002138213 23229 *See all of Chapter 15: "Testing Inertial Sensors", pages 239-259***

**Beschreibung**

Die Erfindung betrifft ein Verfahren zum Verbessern der Meßwerte eines inertialen Meßsystems nach dem Oberbegriff des Anspruchs 1.

Derartige Verfahren werden in inertialen Meßsystemen angewendet, die derzeit ein weit verbreitetes Anwendungsgebiet erfahren. So finden sie bei Regelungs- und Steuerungssystemen Anwendung, in denen eine genaue Kenntnis von Beschleunigung und Winkelgeschwindigkeit in Bezug auf ein inertiales Koordinatensystem (Fixsternsystem) notwendig ist. Üblicherweise wird als inertiales Bezugssystem das erdfeste System in erster Näherung benutzt. Einerseits werden solche, auch als Inertiale-Plattform bezeichnete Meßsysteme in technisch sehr aufwendigen Systemen bei der Ausrichtung und Regelung von Waffen benutzt oder kommen bei der Neigeregelung von Hochgeschwindigkeitszügen zur Anwendung. Andererseits werden solche Systeme dann schon bald zu einem Massenartikel, wenn Kraftfahrzeuge in immer stärkerem Maße mit Airbags und Seitenaufprallschutz, aber auch mit Roll- und Gierstabilisatoren oder Navigationssystemen ausgestattet werden und derartige Systeme zum Auslösen und Regeln dieser Sicherheitseinrichtungen Verwendung finden. Ebensolche Einrichtungen werden auch in der Luftfahrtindustrie und der Marinetechnik benötigt.

So ist aus der deutschen Offenlegungsschrift 44 16 586 ein Meßsystem mit Winkelgeschwindigkeits und Beschleunigungssensoren und einer Rechnereinheit bekannt, in dem die Meßwerte der Sensoren zu Ausgangswerten umgerechnet werden, die auf ein inertiales Koordinatensystem bezogen sind.

Die derzeit für diese Meßsysteme verfügbaren Sensoren sind, wenn sie über das erforderliche Maß an Zuverlässigkeit und Präzision verfügen, noch recht kostspielig. Zwar können inzwischen Sensoren, wie Kreisel und Beschleunigungsmesser, als Mikroelektronik-Bauelemente preiswert gefertigt werden, jedoch weisen sie im eingebauten Zustand erhebliche Fehler auf, so daß für den Aufbau der Meßsysteme ein erheblicher Fertigungsaufwand einschließlich der erforderlichen Justier- und Kompensationsarbeiten notwendig ist, um zulässige Fehler- und Offsettoleranzen zu erreichen.

Die zur Bildung der Gattung herangezogene Veröffentlichung: A. Lawrence "Modern Inertial Technology", 1992, Springer-Verlag, New York, XP002138213 23229 (Kap. 15: Testing Inertial Sensors) gibt eine Beschreibung der Vermessung verschiedener Eigenschaften inertialer Sensoren sowie der Berechnung von Korrekturdaten auf der Basis der Meßwerte unter Einschaltung von Rechnereinheiten. Da hierzu eine der wichtigsten Voraussetzungen für die Eichung oder Justierung der Sensoren die Verfügbarkeit von Eichnormalen mit großer Präzision, d. h. hohe Genauigkeit der absoluten Werte für Winkelgeschwindigkeit und Beschleunigung sowie optimale Reproduzierbarkeit von Anregung und Winkellage ist, wird das Meßsystem auf einem Präzisions-Drehtisch montiert, dessen Drehachse genau horizontal ausgerichtet ist. Die Montage erfolgt so, daß Koordinatenachsen des Meßsystems und des Drehtisches parallel verlaufen; Parallelverschiebungen sind unerheblich für das Ergebnis. Damit kann das Meßsytem auf einfache Weise zwei Referenz-Anregungen ausgesetzt werden. Eine dynamische Anregung der Kreisel durch präzise, konstante Drehbewegung und eine statische Anregung der Beschleunigungsmesser durch die Erdbeschleunigung sind auf diese Weise einfach zu realisieren. Die so berechneten Korrekturdaten werden vom Hersteller den ausgelieferten inertialen Sensoren zugeordnet und dem Anwender mit übermittelt, wobei die Anwender die Korrekturdaten zur Verbesserung der Meßeigenschaften der von ihnen eingesetzten inertialen Meßsysteme verwenden können.

Ausgehend von dem in der gattungsgemäßen Veröffentlichung beschriebenen Verfahren liegt der Erfindung die Aufgabe zugrunde, ein einfacher handhabbares Verfahren zum Justieren und Kompensieren von Meßfehlern bei einem mit preiswerten Sensoren für Winkelgeschwindigkeiten und Beschleunigungen aufgebauten Meßsystem anzugeben.

Diese Aufgabe wird durch die Merkmale des Anspruchs 1 gelöst.

Das erfindungsgemäße Verfahren ist besonders vorteilhaft in der Fertigung von Massenprodukten einzusetzen, da es nur geringen personellen Aufwand für die Einrichtung des Meßsystems und der Prüfeinrichtung erfordert. Aufwendige mechanische Justierarbeiten entfallen ebenso wie die dafür erforderlichen Justiervorrichtungen und Hilfsmittel. Das erfindungsgemäße Verfahren eignet sich sehr gut für eine vollautomatische, ökonomische Fertigungsprüfung inertialer Meßsysteme, da es die Verwendung einfacher, kostengünstig zu fertigender Sensoren für Winkelgeschwindigkeiten und Beschleunigungen ermöglicht und deren Fertigungstoleranzen in der Justierung oder Eichung des Meßsystems berücksichtigt, so daß damit die Genauigkeit des inertialen Meßsystems entscheidend verbessert wird.

Das erfindungsgemäße Verfahren wird auch durch die Unteransprüche vorteilhaft weitergebildet.

Dabei hat es sich für einen optimalen Prüfablauf als vorteilhaft erwiesen, der Vermessung auf dem Drehtisch eine Messung der Winkelgeschwindigkeitsoffsets der Kreisel und der Beschleunigungsoffsets der Beschleunigungsmesser in Abhängigkeit von der Temperatur voranzustellen, da die Messungen im allgemeinen einen hohen Zeitbedarf haben.

Die Erfindung wird im folgenden anhand eines in der Zeichnung dargestellten Ausführungsbeispiels näher beschrieben. Es zeigen:

Fig. 1    eine Prinzipskizze der Prüfeinrichtung mit einem Meßsystem,

Fig. 2    ein Blockschaltbild eines Meßsystems,

Fig. 3    ein Funktionsdiagramm des Meßsystems.

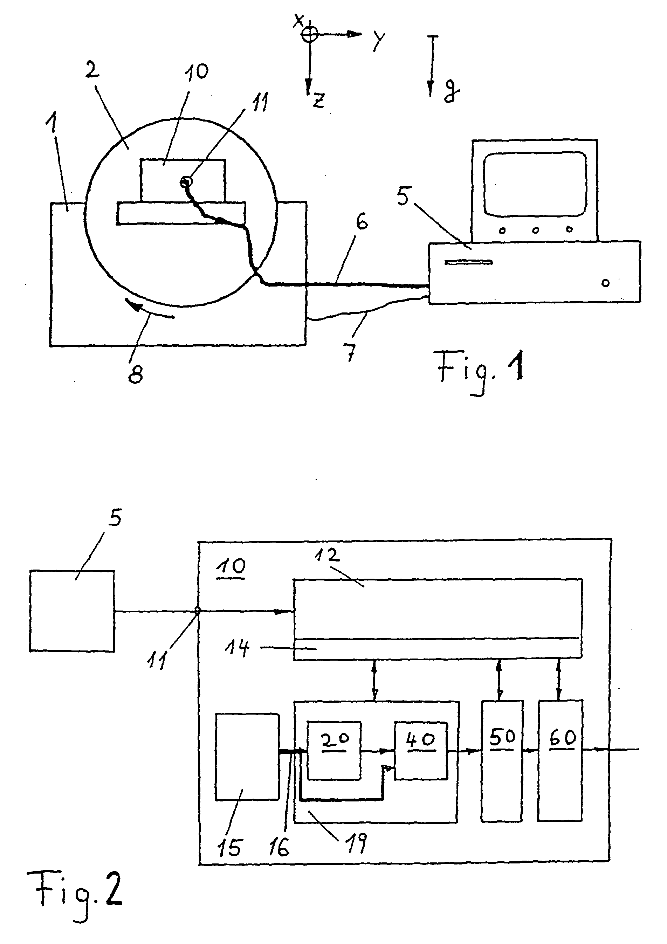

Für das erfindungsgemäße Verfahren wird, wie in Fig. 1 dargestellt, ein Präzisionsdrehtisch 1 mit einer um mindestens eine Achse drehbaren Montagefläche 2 verwendet, auf der das inertiale Meßsystem 10 montiert ist. Zur Steuerung des Meßablaufs sind der Drehtisch 1 über ein Steuerkabel 7 und das Meßsystem 10 über ein Steuer- und Versorgungskabel 6 mit einem Computer 5 verbunden. Dabei dient die mit dem Versorgungkabel 6 verbundene Schnittstelle 11 des Meßsystems 10 nicht nur der Zuführung für die Stromversorgung sondern auch zur Datenübertragung für Steuerbefehle zum Aktivieren von Justier- und Normalmodus des Meßsystems 10.

Das eingezeichnete Koordinatensystem x,y,z stimmt mit den Körperachsen des Meßsystems 10 überein, nach denen auch die Sensoren des Meßsystem 10, die Beschleunigungsmesser und Winkelgeschwindigkeitssensoren, i.a. Kreisel, ausgerichtet sind. Dabei ist die in die Zeichenebene weisende x-Achse oder Längsachse des Meßsystems 10 parallel zur Drehachse und auf die Montagefläche 2 hin ausgerichtet. Die Drehung im mathematisch positiven Sinn um die x-Achse erfolgt daher in Richtung des Pfeils 8. Die y-Koordinate entspricht der Querachse und die z-Koordinate der Vertikalachse des Meßsystems 10.

Zur Ermittlung der Justierdaten müssen alle Sensoren des Meßsystems 10 eine genau vorgegeben Anregung erfahren. Zur Anregung der Beschleunigungsmesser ist dabei die Erdbeschleunigung $g = 9,80665$ m/sec$^2$ vorgesehen. In der dargestellten Lage des Meßsystems 10 wirkt die Erdbeschleunigung g in Richtung der z-Achse. Um die Wirkungsrichtung für die y-Achse zu aktivieren muß dann das Meßsystem exakt um 90° gedreht werden. Durch eine weitere 90°-Drehung ist die Anregung der Beschleunigungsmesser in negativer z-Richtung zu erzielen und die dritte 90°-Drehung ermöglicht die Anregung in der negativen y-Koordinatenachse. In dieser Montagelage wird ferner durch durch eine konstante, gleichförmige Drehung um einen vorgegebenen Winkelbereich der die Winkelgeschwindigkeit messende Kreisel in der x-Achse angeregt.

Zur Messung der Beschleunigung in Richtung der x-Koordinate ist das Meßsystem 10 umzumontieren, so daß die x-Achse vertikal und mit dem Gravitationsvektor g parallel verläuft. In dieser Montagelage zeigt die y-Achse auf den Drehteller, so daß der auf die y-Achse ausgerichtete Kreisel dynamisch vermessen werden kann. Für die Vermessung des Kreisels in der z-Achse ist eine weitere Änderung der Montage vorzunehmen und die z-Achse zum Drehtisch hin auszurichten.

Das Meßsystem ist bei einer Prüfvorrichtung gemäß Fig.1, die eine Montagefläche 2 mit nur einer Drehachse aufweist, mehrfach zu montieren. Dabei stellen die Gehäuseflächen die jeweiligen Bezugsflächen dar und erfordern eine streng orthogonale Fertigung. Da jedoch auch in der späteren Gebrauchslage des Meßsystems 10 die Bezugflächen durch die Gehäuseflächen gebildet werden, ergibt sich hieraus keine Beeinträchtigung der Präzision.

Der grundsätzliche Aufbau des Meßsystems 10 ergibt sich aus Fig. 2. Das Meßsystem 10 weist eine Rechnereinheit 12 mit integriertem Speicher 14 für Daten und Programmme auf und ist über die Schnittstelle 11 mit dem Computer 5 verbunden.

Die Rechnereinheit 12 ist weiterhin mit einer Signalvorverarbeitung 16, einem Inertialwertrechner 50 und einer Datenausgabe 60 verbunden und steuert durch im Speicher 14 abgelegte Programme die interne Datenverarbeitung des Meßsystems 10. In der Signalvorverarbeitung 16 werden die von einer Sensoreinheit 15 gemessenen Winkelgeschwindigkeiten und Beschleunigungen in einer Justierung 20 und einer Kompensation 40 abhängig von Justier- oder Normalmodus zur Weiterverarbeitung im Inertialwertrechner 50 aufbereitet.

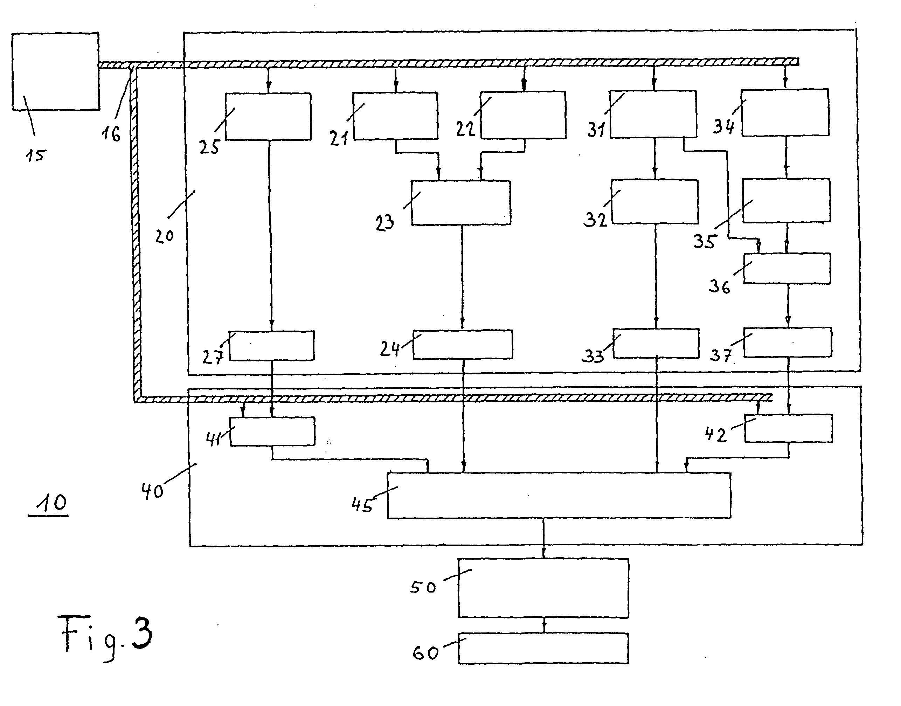

In Fig. 3 sind die grundsätzlichen Funktionen des erfindungsgemäßen Meßsystems 10 in einem Funktionsdiagramm dargestellt. Die von den Sensoreinheit 15 aufgenommenen Sensordaten, Winkelgeschwindigkeit, Beschleunigung und Temperatur, werden über den Datenbus 16 entweder der Justierung 20 oder der Kompensation 40 zugeführt. Die Auswahl der jeweiligen Funktion erfolgt von außen über die Schnittstelle 11 in Fig. 1 durch den Steuerrechner 5. Die nachfolgenden Verfahrensschritte werden dann durch die Rechnereinheit 12 programmgesteuert auslöst. Aus Gründen der Übersichtlichkeit ist auf die Wirkungslinien von der Rechnereinheit 12 zu den Funktionsblöcken der Fig. 3 verzichtet worden.

Die von den Sensoren aufgenommenen Meßwerte von Beschleunigung und Winkelgeschwindigkeit sind grundsätzlich fehlerbehaftet. Dabei wird zwischen Offset-, Einbaulageoder Skalierungsfehlern unterschieden. Sensoren die inzwischen als Mikroelektronik-Bauelemente in großer Stückzahl hergestellt werden können, müssen bei der Integration zu vollständigen Meßsystemen mit guter Genauigkeit justiert und auf die Koordinatenachsen x,y,z des Meßsystem 10 ausgerichtet werden. Die genannten Fehler gehen dabei zwar unmittelbar in die Meßergebnisse ein, werden aber in dem erfindungsgemäßen verfahren durch Referenzmessung im Fertigungstest bestimmt und im Betriebsgebrauch kompensiert. Dazu ist es erforderlich, wie in Fig. 3 dargestellt, die Sensordaten der Beschleunigungsmesser und Kreisel für jede Koordinatenachse x,y,z des Meßsystems 10 getrennt zu erfassen und zu verarbeiten.

Die Sensoreinheit 15 weist für jede Koordinatenachse x,y,z je einen Beschleunigungsmesser für die Beschleunigungen $a_x$, $a_y$, $a_z$ und je einen Kreisel für die

Winkelgeschwindigkeit $\omega_x$, $\omega_y$, $\omega_z$ auf. Als Referenz für die Beschleunigungsmesser wird die Gravitation oder Erdbeschleunigung g = 9,80665 m/sec$^2$ benutzt. Dabei ist jedoch zu beachten, daß der Beschleunigungssensor, der der Koordinatenachse des Meßsystems 10 zugeordnet ist, die jeweils in Richtung des Gravitationsvektors weist, den negativen Betrag der Erdbeschleunigung mißt.

Zur Ermittlung der Justierdaten der Beschleunigungsmesser werden die Beschleunigungswerte $a_{nx}$, $a_{ny}$, $a_{nz}$ von der Sensoreinheit 15 zur Justierung 20 übertragen, wobei mit dem Index n der Meßzyklus und mit den Indizes x, y,z die Koordinatenachsenzuordnung gekennzeichnet ist. In einer Beschleunigungs-Datenerfassung 31 (B-Datenerfassung 31) wird zur Rauschreduzierung eine Anzahl von Beschleunigungswerten $a_{nx}$, $a_{ny}$, $a_{nz}$ für jede Koordinate übernommen und für z.B typisch 2000 Messungen gemittelt. Es sind mehrere Meßzyklen derart durchzuführen, daß das Meßsystem 10 mit seinen Koordinatenachsen in Richtung des Gravitationsvektiors g oder in die inverse Richtung gedreht wird. Dabei werden jedoch stets die Meßwerte aller Beschleunigungssensoren an die B-Datenerfassung 31 übertragen. D.h. ausgehend von Fig. 1 stimmt zunächst die z-Achse mit dem Gravitationsvektor g überein, so daß die Beschleunigung $a_{1z}$ sowie $a_{1x}$, $a_{1y}$ an die B-Datenerfassung 31 übertragen werden. Der Drehteller 2 wird um genau 90° gemäß Pfeil 8 gedreht und damit die y-Achse auf den Gravitationsvektor g ausgerichtet, so daß die Beschleunigungswerte $a_{3y}$ sowie $a_{3x}$, $a_{3z}$ erfaßt werden. Eine weitere Drehung um 90° bewirkt eine Anregung des Beschleunigungsmessers in der -z-Achse und somit die Erfassung der Beschleunigung $a_{2z}$ sowie $a_{2x}$, $a_{2y}$. Die dritten Drehung um 90° hat eine Anregung in der negativen y-Koordinatenachse und die Beschleunigung $a_{4y}$ sowie $a_{4x}$, $a_{4z}$ zur Folge, die ebenfalls an die B-Datenerfassung 31 übertragen werden. Zur Vermessung des Beschleunigungssensors der x-Achse muß das Meßsystem ummontiert werden, so daß die Beschleunigung $a_{5x}$ sowie $a_{5y}$, $a_{5z}$ gemessen und erfaßt werden. Die Beschleunigungen $a_{6x}$ sowie $a_{6y}$, $a_{6z}$ werden durch Umschlagen, d.h. zweimalige 90°-Drehung und Einwirkung des Gravitationsvektors auf den Beschleunigungsmesser in der x-Achse erhalten. Der Beschleunigungsoffset $\Delta a_x$, $\Delta a_y$, $\Delta a_z$ jedes Beschleunigungssensors errechnet sich nun jeweils aus den Beschleunigungen $a_1$, $a_3$, $a_5$ bei Ausrichtung in Richtung des Gravitationsvektors g und den Beschleunigungen $a_2$, $a_4$, $a_6$ bei Ausrichtung entgegen der Richtung des Gravitationsvektors zu

$$\Delta a_x = \frac{a_{5x} + a_{6x}}{2},$$

$$\Delta a_y = \frac{a_{3y} + a_{4y}}{2}, \tag{1}$$

$$\Delta a_z = \frac{a_{1z} + a_{2z}}{2}.$$

Zwischen den Beschleunigungssensoren in den Koordinatenachsen x,y,z bestehen Kreuzkopplungen, die zur Folge haben, daß eine Beschleunigungsanregung nur dann genau in einer Achse wirkt, wenn alle Beschleunigungssensoren ohne Einbaufehler exakt orthogonal ausgerichtet sind. Ist das nicht der Fall hat die Beschleunigungsanregung auch Meßwerte an den beiden anderen Beschleunigungssensoren zur Folge. Die Meßwerte sind darüberhinaus durch die Meßverstärkung jedes Sensors beeinflußt. Die Abhängigkeit der Meßwerte $a_{nx}$, $a_{ny}$, $a_{nz}$ von den Anregungen $a_x$, $a_y$, $a_z$ und den Beschleunigungsoffsets $\Delta a_x$, $\Delta a_y$, $\Delta a_z$ ist allgemein durch ein Gleichungssystem gemäß Gleichung 2 in Matrixform beschrieben

$$\begin{pmatrix} a_{nx} \\ a_{ny} \\ a_{nz} \end{pmatrix} = \begin{pmatrix} k_{11} & k_{12} & k_{13} \\ k_{21} & k_{22} & k_{23} \\ k_{31} & k_{32} & k_{33} \end{pmatrix} \cdot \begin{pmatrix} a_x \\ a_y \\ a_z \end{pmatrix} + \begin{pmatrix} \Delta a_x \\ \Delta a_y \\ \Delta a_z \end{pmatrix} \tag{2}$$

und ist in Kurzform durch die Gleichung 3 darzustellen

$$(A_n) = (K) \cdot (A) + (\Delta A) \qquad\qquad (3),$$

wobei die Kopplungsmatrix K mit den Koeffizienten $k_{ij}$ (i,j= 1,2,3) die Einbaulageabweichungen und Skalierungsfehler, d.h. Verstärkungsfehler, beinhaltet.

Aus den in der B-Datenerfassung 31 vorliegenden Beschleunigungswerten $a_{nx}$, $a_{ny}$, $a_{nz}$, den Beschleunigungsoffsets $\Delta a_x$, $\Delta a_y$, $\Delta a_z$ und den bekannten Referenanregungen durch die Erdbeschleunigung g, wobei die Anregungsvektoren bei Ausrichtung der jeweiligen Koordinatenachse auf den Gravitationsvektor die Werte

$$\text{x-Achse:} \ (A) = \begin{pmatrix} -g \\ 0 \\ 0 \end{pmatrix}, \ \text{y-Achse:} \ (A) = \begin{pmatrix} 0 \\ -g \\ 0 \end{pmatrix} \ \text{und z-Achse:} \ (A) = \begin{pmatrix} 0 \\ 0 \\ -g \end{pmatrix}$$

haben, werden in einem B-Drehmatrixrechner 32 die Koeffizienten $k_{ij}$ der Dreh- oder Koppelmatrix K errechnet. Außerdem wird die zur Koppelmatrix inverse Matrix $K^{-1}$ mit den Korrekturwerten $K_{ij}$ (i,j= 1,2,3), Gleichung 4, gebildet

$$K^{-1} = \begin{pmatrix} K_{11} & K_{12} & K_{13} \\ K_{21} & K_{22} & K_{23} \\ K_{31} & K_{32} & K_{33} \end{pmatrix} \qquad (4),$$

die zur Kompensation der während des Betriebs des Meßsystems 10 im Normalmodus anfallenden Meßwerte im B-Matrix-Speicher 33 abgelegt wird.

Die Bestimmung der Justierdaten der Kreisel erfolgt in einer ähnlichen Art und Weise wie für die Beschleunigungsmesser. Als Referenz im statischen Ruhezustand der Kreisel und für die dynamische Anregung dient der Drehteller 2 des Präzisionsdrehtisches 1. Dabei sind die drei Koordinatenachsen x,y,z des Meßsystems 10 nacheinander auf die Drehachse des Drehtischs 1 ausgerichtet, was bei einem Drehtisch 1 gemäß Fig. 1, der eine Drehbewegung um nur eine Achse zuläßt durch Ummontieren erfolgen muß.

Zunächst werden im Ruhezustand des Drehtischs 1 die Winkelgeschwindigkeiten $\omega_{0x}$, $\omega_{0y}$, $\omega_{0z}$ der Winkelgeschwindigkeitssensoren gemessen. Als Winkelgeschwindigkeitssensoren sind in der Sensoreinheit 15 für jede Koordinatenachse x,y,z des Meßsystem 10 je ein Kreisel vorgesehen. Die Meßwerte $\omega_{0x}$, $\omega_{0y}$, $\omega_{0z}$ dieser Kreisel werden über den Datenbus 16 von der ω-Offseterfassung 21 übernommen und zwischengespeichert. Dann wird der Drehtisch 1 angetrieben und das Meßsystem 10 um die mit der Drehachse des Drehtischs 1 übereinstimmende Koordinatenachse x des Meßsystems 10 mit konstanter, genau definierter Winkelgeschwindigkeit ω = 70°/sec gedreht. Die vorgegebene Winkelgeschwindigkeit $\omega_x$ wird zumindest über einen begrenzten Drehwinkelbereich exakt konstantgehalten, da diese Winkelgeschwindigkeit $\omega_x$ die Referenz für die Ermittlung der Kreiselkorrekturdaten bildet. Die Meßwerte $\omega_{1x}$, $\omega_{1y}$, $\omega_{1z}$ aller drei Kreisel werden in der ω-Datenerfassung 22 in der verfügbaren Meßzeit mehrfach gemessen, gemittelt und zwischengespeichert. Wenn nach den beiden Montageänderungen auch die ω-Offsets bei Ausrichtung auf die beiden anderen Koordinatenachsen y,z in der ω-Offseterfassung 21 und die Winkelgeschwindigkeitsmesswerte $\omega_{nx}$, $\omega_{ny}$, $\omega_{nz}$ (n= 2,3) in der ω-Datenerfassung 22 vorliegen, werden im ω-Drehmatrixrechner 23 die Winkelgeschwindigkeitswerte $\omega_{nx}$, $\omega_{ny}$, $\omega_{nz}$ (n= 1,2,3) um die Offsets $\omega_{0x}$, $\omega_{0y}$, $\omega_{0z}$ bereinigt und die Drehmatrix $K_\omega$ mit den Koeffizienten $k_{ij}$ gemäß Gleichung 5

$$\begin{pmatrix} \omega_{nx} \\ \omega_{ny} \\ \omega_{nz} \end{pmatrix} = \begin{pmatrix} \dot{k}_{11} & \dot{k}_{12} & \dot{k}_{13} \\ \dot{k}_{21} & \dot{k}_{22} & \dot{k}_{23} \\ \dot{k}_{31} & \dot{k}_{32} & \dot{k}_{33} \end{pmatrix} \cdot \begin{pmatrix} \omega_x \\ \omega_y \\ \omega_z \end{pmatrix} + \begin{pmatrix} \omega_{0x} \\ \omega_{0y} \\ \omega_{0z} \end{pmatrix} \qquad (5)$$

berechnet. Auch für die Winkelgeschwindigkeiten wird die inverse Matrix $K_\omega^{-1}$ gebildet und als Korrekturmatrix mit den Korrekturwerten (Koeffizienten) $K^*_{ij}$ (i,j= 1,2,3) im ω-Matrix-Speicher 23 abgelegt.

Im realen Prüfbetrieb für derartige Meßsysteme 10 wird der Meßprogrammablauf hinsichtlich der Montageveränderungen optimiert. Von der hier zur geschlossen Darstellung von Winkelgeschwingikeits- und Beschleunigungsmessungen vorgezogenen Abfolge wird dann insofern abgewichen, als in jeder Montagelage des Meßsystems 10 alle erforderlichen Winkelgeschwindigkeits- und Beschleunigungsmessungen unabhängig von der vorher beschrieben Abfolge durchgeführt und nach Beendigung aller Messungen die Drehmatrizen in den Drehmatrixrechnern 23 und 24 ermittelt werden.

Die Kreisel und Beschleunigungssensoren sind im allgemeinen temperaturempfindlich. Daher ist bei der Justierung 20 eine Offseterfassung in Abhängigkeit von der Temperatur vorgesehen. Temperaturzyklen haben in der Regel einen sehr hohen Zeitbedarf, damit Ausgleichvorgänge bei Temperaturänderung abklingen können. Für die temperaturabhängigen Messungen verbleibt das Meßsystem 10 in einer definierten Ruhelage ohne die geringste Erschütterung. Dabei werden mit dem Temperaturwert $\vartheta$ des Temperatursensor in der Sensoreinheit 15 die Meßwerte der Kreisel $\omega_x(\vartheta)$, $\omega_y(\vartheta)$, $\omega_z(\vartheta)$ an die temperaturabhängige $\omega$-Offseterfassung 25 und die Meßwerte der Beschleunigungssensoren $a_x(\vartheta)$, $a_y(\vartheta)$, $a_z(\vartheta)$ an die temperaturabhängige B-Datenerfassung 34 übertragen. Nach einer Mittelwertbildung über eine Vielzahl von Meßdaten bei der jeweils gleichen Temperatur $\vartheta$ werden die $\omega$-Offsets in einer $\omega$-Temperatur-Tabelle 27 gespeichert. Auch die Beschleunigungswerte $a_x(\vartheta)$, $a_y(\vartheta)$, $a_z(\vartheta)$ werden gemittelt und als relative Beschleunigungswerte in einer B-Temperatur-Tabelle 35 zwischengespeichert. Die relative Beschleunigungswerte der B-Temperatur-Tabelle 35 werden anschließend in einer B-Offsetrechnung 36 mit den in der B-Datenerfassung 31 ermittelten absoluten Beschleunigungswerten zu einem Beschleunigungsoffset korrigiert und in der B-Offset-Temperatur-Tabelle 37 gespeichert.

Nach der programmgesteuerten Umschaltung des Meßsystems 10 in den Normalmodus werden die Meßwerte der Sensoreinheit 15, d.h. die Beschleunigungen $a_{nx}$, $a_{ny}$, $a_{nz}$, die Winkelgeschwindigkeiten $\omega_{nx}$, $\omega_{ny}$, $\omega_{nz}$ und die Temperatur $\vartheta$, über den Datenbus 16 an die Kompensation 40 übertragen. In der Kompensation 40 erfolgt entsprechend der Temperatur $\vartheta$ zunächst die Offsetkorrektur der Winkelgeschwindigkeit $\omega_{nx}$, $\omega_{ny}$, $\omega_{nz}$ mit den Werten der $\omega$-Temperatur-Tabelle 27 in einer $\omega$-Summierstufe 41. Ebenso werden die Beschleunigungswerte $a_{nx}$, $a_{ny}$, $a_{nz}$ in der B-Summierstufe 42 mit temperaturabhängigen Beschleunigungsoffsets der B-Temperatur-Tabelle 37 korrigiert. Die Ausgangswerte der Summierstufen 41 und 42 stellen damit die um Offsets bereinigten Winkelgeschwindigkeiten und Beschleunigungen dar, deren Einbaulage- und Skalierungsfehler mit den Kompensationsmatrizen aus dem $\omega$-Matrix-Speicher 24 und dem B-Matrix-Speicher 33 in einer Kompensationsrechnung 45 optimiert werden. Die derart kompensierten und optimierten Meßwerte werden in einem Inertialwertrechner 50 mit dem bekannten Euler-Transformationsverfahren in Winkelgeschwindigkeiten und Beschleunigungen eines inertialen Bezugssystems umgerechnet und in einer Datenausgabe 60 bereitgestellt. Sie geben die Bewegung des Meßssystems 10 bzw. die Bewegung der mit diesem Meßsystem 10 verbundenen Anlage in diesem inertialen Bezugssystem an.

In einer weiteren Ausführungsform des erfindungsgemäßen Verfahrens werden regelmäßig mehr Meßwerte für Beschleunigung $a_{nx}$, $a_{ny}$, $a_{nz}$ und Winkelgeschwindigkeit $\omega_{nx}$, $\omega_{ny}$, $\omega_{nz}$ von der Sensoreinheit 15 in Fig. 2 erfaßt, als für die Berechnung der Kopplungsmatrizen K und $K_\omega$ erforderlich ist. Dabei kann das Meßsystem 10 dann auch von der Lotrichtung abweichende Winkellagen einnehmen. Da die Koeffizienten der Kopplungsmatrizen K und $K_\omega$ linear unabhängig sind, werden die durch Gleichungen 2 und 5 beschriebenen Matrixgleichungen entsprechend der Zahl der Meßergebnisse erweitert und die Dreh- oder Koppelmatrizen K, $K_\omega$ bzw. die dazu inversen Matrizen $K^{-1}$, $K_\omega^{-1}$ in einem in der Recheneinheit 12 implementierten, bekannten Regresssionsrechenverfahren ermittelt.

In Abwandlung des beschriebenen Ausführungsbeispiels kann die Justierung des Meßsystems 10 dann ohne Ummontieren erfolgen, wenn statt eines einachsigen Drehtischs 1 ein Präzisions-Drehtisch mit einer um drei Koordinatenachsen drehbaren Montagefläche verwendet wird. Eine solche Lösung ist für einen praktischen, automatischen Prüfbetrieb von Vorteil, ohne jedoch die Qualität der Justierung weiter zu verbessern.

Eine weitere Modifikation des Meßverfahrens ergibt sich für ein vergleichbares Meßsystem bei einer reduzierten Anzahl von Sensoren. Denn das Verfahren ist ebensogut zur Justierung und Kompensation geeignet, wenn ein Meßsystem lediglich aus ein oder zwei Sensoren, seien es Kreisel oder Beschleunigungsmesser, besteht. Dazu hat dann eine Anpassung des Meßablaufs sowie die Reduzierung der Kompensationsmatrizen und Speicherfunktionen zu erfolgen, die dem mit diesem Verfahren vertrauten Fachmann leicht möglich sind.

**Patentansprüche**

1. Verfahren zum Verbessern der Meßwerte eines inertialen Meßsystems (10), das eine Rechnereinheit (12) zur Koordinatentransformation und Sensoren für Beschleunigungen und Winkelgeschwindigkeiten aufweist, die in einem den orthogonalen Achsen des Meßsystems (10) zugeordneten Koordinatensystem gemessen werden, wobei in einem Justiermodus das Meßsystem (10) auf einer Prüfeinrichtung (1) die eine um mindestens eine Koordinatenachse drehbare Montagefläche (2) aufweist, derart montiert wird, daß orthogonale Koordinatenachsen x, y, z von Prüfeinrichtung (1) und Meßsystem (10) parallel verlaufen, **dadurch gekennzeichnet, daß** die von den Sensoren gemessenen Beschleunigungen und Winkelgeschwindigkeiten derart transformiert werden, daß die Ausgangswerte in einem Inertialsystem bereitgestellt und die Meßwerte der Sensoren mit in dem Justiermodus gewonnenen Korrekturwerten kompensiert werden und daß in dem Justiermodus aufeinanderfolgend jede Koordinatenachse x, y, z des Meßsystems (10) einerseits in Lotrichtung und in die jeweils inverse Lotrichtung und andererseits in Drehachsenrichtung der Prüfeinrichtung (1) ausgerichtet wird und daß für jede Ausrichtung des Meßsystems (10) die Meßwerte der Sensoren erfaßt und aus den Meßwerten unter Berücksichtigung eines linearen Gleichungssystems für die Kreuzkopplungen der Sensoren die Korrekturwerte berechnet und in einem Speicher (24, 33) abgespeichert werden.

2. Verfahren nach Anspruch 1, **dadurch gekennzeichnet, daß** im Ruhezustand des Meßsystems (10) die Meßwerte der Winkelgeschwindigkeitssensoren jeweils als Winkelgeschwindigkeitsoffset ($\omega_{0x}$, $\omega_{0y}$, $\omega_{0z}$) erfaßt werden.

3. Verfahren nach Anspruch 2, **dadurch gekennzeichnet, daß** das Meßsystem (10) um die auf die Drehachse ausgerichtete Koordinatenachse mit konstanter Winkelgeschwindigkeit gedreht wird, die Meßwerte ($\omega_{nx}$, $\omega_{ny}$, $\omega_{nz}$) der Winkelgeschwindigkeitssensoren fortlaufend erfaßt werden und daß aus den Winkelgeschwindigkeiten ($\omega_{nx}$, $\omega_{ny}$, $\omega_{nz}$) und den Winkelgeschwindigkeitsoffsets ($\omega_{0x}$, $\omega_{0y}$, $\omega_{0z}$) die Korrekturwerte als Koeffizienten ($K_{ij}^{*}$) einer Kompensationsmatrix ($K_\omega^{-1}$) der Winkelgeschwindigkeiten berechnet werden.

4. Verfahren nach einem der Ansprüche 1 bis 3, **dadurch gekennzeichnet, daß** jeweils für den mit der Lotrichtung übereinstimmenden Beschleunigungssensor mit der Erdbeschleunigung g als Referenz aus den Meßwerten des Beschleunigungssensors in der Lotrichtung und in der dazu inversen Lotrichtung ein Beschleunigungsoffset ($\Delta a_x$, $\Delta a_y$, $\Delta a_z$) durch Mittelung berechnet wird und daß mit den den Koordinatenachsen zugeordneten Meßwerten ($a_{nx}$, $a_{ny}$, $a_{nz}$) und den Beschleunigungsoffsets ($\Delta a_x$, $\Delta a_y$, $\Delta a_z$) die Korrekturwerte als Koeffizienten ($K_{ij}$) einer Kompensationsmatrix ($K^{-1}$) der Beschleunigungen berechnet werden.

5. Verfahren nach einem der Ansprüche 3 und 4, **dadurch gekennzeichnet, daß** die Kompensationsmatrizen ($K_\omega^{-1}$, $K^{-1}$) im Speicher abgelegt werden.

6. Verfahren nach einem der Ansprüche 1 bis 5 **dadurch gekennzeichnet, daß** das Meßsystem (10) im Ruhezustand einem Temperaturzyklus unterworfen wird, daß die Meßwerte der Winkelgeschwindigkeitssensoren als temperaturabhängige Winkelgeschwindigkeitsoffsets in einer $\omega$-Temperatur-Tabelle (27) zusammen mit der zugehörigen Temperatur $\vartheta$ abgelegt werden, daß temperaturabhängige Meßwerte der Beschleunigungssensoren in einer B-Temperatur-Tabelle (35) abgelegt werden und daß für jeden Beschleunigungssensor aus den abgelegten temperaturabhängigen Meßwerten ($a_x(\vartheta)$, $a_y0(\vartheta)$, $a_z(\vartheta)$) sowie aus den Meßwerten ($a_{nx}$, $a_{ny}$, $a_{nz}$) in Lotrichtung und in der inversen Lotrichtung temperaturabhängige Beschleunigungsoffsets bestimmt und in einer B-Offset-Temperatur-Tabelle (37) abgelegt werden.

7. Verfahren nach Anspruch 6 **dadurch gekennzeichnet, daß** zusätzlich die Meßwerte der Winkelgeschwindigkeits- und der Beschleunigungssensoren um die in den Tabellen (27, 37) gespeicherten Winkelgeschwindigkeits- und Beschleunigungsoffsets in Abhängigkeit von der Temperatur $\vartheta$ korrigiert werden.

8. Verfahren nach einem der Ansprüche 5 bis 7, **dadurch gekennzeichnet, daß** die Kompensation der Meßwerte mit den in den Speichern (24, 33) abgelegten Kompensationsmatrizen ($K^{-1}$, $K_\omega^{-1}$) vorgenommen wird.

9. Verfahren nach einem der Ansprüche 1 bis 8, **dadurch gekennzeichnet, daß** zur Berechnung der Koeffizienten des linearen Gleichungssystems bei einer mehr als einer erforderlichen Anzahl vorhandener Meßwerte lineare Regressionsrechenverfahren verwendet werden.

## Claims

1. Method for improving the measurement values of an inertial measurement system (10) that has a computer unit (12) for coordinate conversion and sensors for accelerations and angular speeds that are measured in a coordinate system allocated to the orthogonal axes of said measurement system (10) wherein in an alignment mode said measurement system (10) is mounted on a testing device (1), which has a mounting surface (2) rotatable about at least one coordinate axis, such that orthogonal coordinate axes x, y, z of testing device (1) and measurement system (10) are parallel, **characterized in that** that the accelerations and angular speeds as measured by the sensors are converted such that the output values are provided in an inertial system and said measurement values of said sensors are compensated with correction values obtained in the alignment mode and that within the alignment mode each coordinate axis x, y, z of said measurement system (10) is successively oriented in the vertical and in the inverse vertical on the one hand and in the direction of the axis of rotation of the testing device (1) on the other hand and that for each orientation of said measurement system (10) said measurement values of said sensors are acquired and, taking into account a linear equation system for the cross couplings of said sensors, the correction values are calculated from the measurement values and are stored in a memory (24, 33).

2.  Method in accordance with claim 1, **characterized in that** when said measurement system (10) is in the resting state, the measurement values of the angular speed sensors are acquired as angular speed offset ($\omega_{0x}$, $\omega_{0y}$, $\omega_{0z}$).

3.  Method in accordance with claim 2, **characterized in that** said measurement system (10) is rotated around the coordinate axis oriented to the axis of rotation at a constant angular speed, said measurement values ($\omega_{nx}$, $\omega_{ny}$, $\omega_{nz}$) of said angular speed sensors are acquired continuously, and **in that** the correction values are calculated from said angular speeds ($\omega_{nx}$, $\omega_{ny}$, $\omega_{nz}$) and said angular speed offsets ($\omega_{0x}$, $\omega_{0y}$, $\omega_{0z}$) as coefficients ($K_{ij}$) of a compensation matrix ($K_{\omega}^{-1}$) of said angular speeds.

4.  Method in accordance with any of claims 1 through 3, **characterized in that** for the acceleration sensor that coincides with the vertical with the gravitational acceleration g as reference, an acceleration offset ($\Delta a_x$, $\Delta a_y$, $\Delta a_z$) is calculated from the measurement values of the acceleration sensor in the vertical and in the vertical inverse thereto by finding the mean, and **in that** the correction values are calculated with the measurement values ($a_{nx}$, $a_{ny}$, $a_{nz}$) allocated to the coordinate axes and the acceleration offsets ($\Lambda a_x$, $\Lambda a_y$, $\Lambda a_z$) as coefficients ($K_{ij}$) of a compensation matrix ($K^{-1}$) of the accelerations.

5.  Method in accordance with any of claims 3 or 4, **characterized in that** said compensation matrices ($K_{\omega}^{-1}$, $K^{-1}$) are stored in said memory.

6.  Method in accordance with any of claims 1 through 5, **characterized in that** said measurement system (10) in the rest state is subjected to a temperature cycle, **in that** said measurement values of said angular speed sensors are stored as temperature-dependent angular speed offsets in a $\omega$-temperature table (27) together with the associated temperature $\vartheta$, **in that** temperature-dependent measurement values of said acceleration sensors are stored in a B-temperature table (35), and **in that** for each acceleration sensor, temperature-dependent acceleration offsets are determined from said stored temperature-dependent measurement values ($a_x(\vartheta)$, $a_y(\vartheta)$, $a_z(\vartheta)$) and from said measurement values ($a_{nx}$, $a_{ny}$, $a_{nz}$) in the vertical and in the inverse vertical and are stored in a B-offset temperature table (37).

7.  Method in accordance with claim 6, **characterized in that** additionally said measurement values of said angular speed and acceleration sensors are corrected by the angular speed and acceleration offsets stored in said tables (27, 37), as a function of the temperature $\vartheta$.

8.  Method in accordance with any of claims 5 through 7, **characterized in that** the compensation of said measurement values is performed using said compensation matrices ($K^{-1}$, $K_{\omega}^{-1}$) stored in said memories (24, 33).

9.  Method in accordance with any of claims 1 through 8, **characterized in that** for calculating the coefficients of said linear equation system more than a required number of available measurement values are used in a linear regression method.

**Revendications**

1.  Procédé permettant d'améliorer les valeurs de mesure d'un système de mesure inertiel (10) présentant une unité de calcul (12) pour la transformation de coordonnées et des capteurs pour les accélérations et les vitesses angulaires mesurées dans un système de coordonnées correspondant aux axes orthogonaux du système de mesure (10), le système de mesure (10) étant monté en un mode d'ajustage sur un dispositif de contrôle (1) qui présente une surface de montage (2) mobile autour d'au moins un axe de coordonnée de telle manière que les axes de coordonnées orthogonaux x, y, z du dispositif de contrôle (1) et du système de mesure (10) soient parallèles, **caractérisé en ce que** les accélérations et les vitesses angulaires mesurées par les capteurs sont transformées de telle façon que les valeurs de sortie sont préparées dans un système inertiel et les valeurs de mesure des capteurs sont compensées par des valeurs correctives obtenues dans le mode d'ajustage, **en ce que**, en mode d'ajustage, chaque axe de coordonnée x, y, z du système de mesure (10) est successivement ajusté d'une part dans le sens perpendiculaire et dans le sens perpendiculaire inverse et, d'autre part, dans la direction de l'axe de rotation du dispositif de contrôle (1) et **en ce que**, pour chaque ajustage du système de mesure (10), les valeurs de mesure des capteurs sont enregistrées et les valeurs correctives sont calculées à partir des valeurs de mesure en tenant compte d'un système d'équations linéaire pour les couplages en croix des capteurs et enregistrées dans une mémoire (24, 33).

2. Procédé selon la revendication 1, **caractérisé en ce que**, te système de mesure (10) étant en position de repos, les valeurs de mesure des capteurs de vitesse angulaire sont enregistrées comme ordonnées de la vitesse angulaire ($\omega_{0x}$, $\omega_{0y}$, $\omega_{0z}$).

3. Procédé selon la revendication 2, **caractérisé en ce que** le système de mesure (10) tourne à une vitesse angulaire constante autour de l'axe de coordonnée ajusté sur l'axe de rotation, enregistre en permanence les les valeurs de mesure ($\omega_{nx}$, $\omega_{ny}$, $\omega_{nz}$) des capteurs de vitesse angulaire et que les valeurs correctives sont calculées comme coefficients ($K_{ij}$) d'une matrice de compensation ($K\omega^{-1}$) à partir des vitesses angulaires ($\omega_{nx}$, $\omega_{ny}$, $\omega_{nz}$) et des ordonnées de vitesse angulaire ($\omega_{0x}$, $\omega_{0y}$, $\omega_{0z}$).

4. Procédé selon l'une des revendications 1 à 3, **caractérisé en ce que**, pour chaque capteur d'accélération correspondant à la direction perpendiculaire, avec l'accélération de la pesanteur g comme référence, une ordonnée d'accélération ($\Delta a_x$, $\Delta a_y$, $\Delta a_z$) est obtenue par calcul de la moyenne à partir des valeurs de mesure du capteur d'accélération dans le sens perpendiculaire et dans le sens perpendiculaire inverse, et **en ce que** les valeurs correctives sont calculées sous forme de coefficients ($K_{ij}$) d'une matrice de compensation ($K^{-1}$) des accélérations avec les valeurs de mesure ($a_{nx}$, $a_{ny}$, $a_{nz}$) se rapportant aux axes de coordonnées et avec les ordonnées d'accélération ($\Delta a_x$, $\Delta a_y$, $\Delta a_z$).

5. Procédé selon l'une des revendications 3 ou 4, **caractérisé en ce que** les matrices de compensation ($K\omega^{-1}$, $K^{-1}$) sont placées dans la mémoire.

6. Procédé selon l'une des revendications 1 à 5, **caractérisé en ce que** le système de mesure (10) est soumis en position de repos à un cycle de températures, **en ce que** les valeurs de mesure des capteurs de vitesse angulaire sont enregistrées en tant qu'ordonnées de vitesse angulaire dépendant de la température dans un tableau de températures $\omega$ (27) en même temps que la température $\theta$ correspondante, **en ce que** les valeurs de mesure dépendant de la température fournies par les capteurs d'accélération sont enregistrées dans un tableau de températures B (35) et **en ce que**, pour chaque capteur d'accélération, on détermine à partir des valeurs de mesure dépendant de la température ($a_x(\theta)$, $a_y(\theta)$, $a_z(\theta)$) enregistrées et des valeurs de mesure ($a_{nx}$, $a_{ny}$, $a_{nz}$) dans le sens perpendiculaire et dans le sens perpendiculaire inverse des ordonnées d'accélération en fonction de la température qui sont enregistrées dans un tableau de températures d'ordonnées B (37).

7. Procédé selon la revendication 6, **caractérisé en ce que** les valeurs de mesure des capteurs de vitesse angulaire et des capteurs d'accélération sont par ailleurs corrigées des ordonnées de vitesse angulaire et des ordonnées d'accélération enregistrées dans les tableaux (27, 37) en fonction de la température $\theta$.

8. Procédé selon l'une des revendications 5 à 7, **caractérisé en ce que** la compensation des valeurs de mesure s'effectue avec les matrices de compensation ($K^{-1}$, $K\omega^{-1}$) placées dans les mémoires (24, 33).

9. Procédé selon l'une des revendications 1 à 8. **caractérisé en ce qu'**on utilise pour le calcul des coefficients du système d'équations linéaire des modes de calcul par régression linéaires pour un nombre de valeurs de mesure disponibles obligatoirement supérieur à un.

Fig. 1

Fig. 2

Fig.3

EP 1 144 955 B1